# EUROPEAN PATENT SPECIFICATION

(11) **EP 1 391 481 B1**
(45) Date of publication and mention of the grant of the patent: **02.06.2010**
(21) Application number: 02718623.8
(22) Date of filing: 19.04.2002
(51) Int. Cl.: C08L 11/02, C08K 5/29, C08K 5/3432, C08K 5/13, C08K 5/3417, C08K 5/07

(54) **LATEX COMPOSITION**
LATEXZUSAMMENSETZUNG
COMPOSITION DE LATEX

(30) Priority: 20.04.2001 JP 2001122396; 22.05.2001 JP 2001152353; 22.05.2001 JP 2001152354; 23.05.2001 JP 2001153688
(43) Date of publication of application: 25.02.2004
(73) Proprietor: DENKI KAGAKU KOGYO KABUSHIKI KAISHA, Chiyoda-ku, Tokyo 100-8455 (JP)
(72) Inventor: SUNADA, Kiyoshi, Denki Kagaku Kogyo K. K., Nishi-kubiki-gun, Niigata 949-0305 (JP); WATANABE, Kosuke, Denki Kagaku Kogyo K. K., Nishi-kubiki-gun, Niigata 949-0305 (JP)
(74) Representative: Hartz, Nikolai
(86) International application number: PCT/JP2002/003954
(87) International publication number: WO 2002/085977

(56) References cited:
- EP-A- 0 433 808
- EP-A2- 0 433 808
- WO-A-98/18830
- FR-A- 1 426 602
- FR-A- 2 203 829
- FR-A- 2 268 011
- GB-A- 913 478
- JP-A- 7 053 776
- JP-A- 51 008 352
- JP-B1- 45 000 574
- DATABASE WPI Section Ch, Week 200101 Derwent Publications Ltd., London, GB; Class A18, AN 2001-001720 XP002319512 & JP 2000 256512 A (DENKI KAGAKU KOGYO KK) 19 September 2000 (2000-09-19)
- DATABASE WPI Section Ch, Week 199517 Derwent Publications Ltd., London, GB; Class A60, AN 1995-128489 XP002319513 & JP 07 053776 A (ASAHI DENKA KOGYO KK) 28 February 1995 (1995-02-28)
- DATABASE WPI Section Ch, Week 200005 Derwent Publications Ltd., London, GB; Class A12, AN 2000-056375 XP002319514 & JP 11 209523 A (DENKI KAGAKU KOGYO KK) 3 August 1999 (1999-08-03)
- DATABASE WPI Section Ch, Week 198813 Derwent Publications Ltd., London, GB; Class A12, AN 1988-089246 XP002319515 & JP 63 041548 A (TOYO SODA MFG CO LTD) 22 February 1988 (1988-02-22)

## Description

### TECHNICAL FIELD

The present invention relates to polychloroprene latex composition which is useful for impregnated paper, a binder for fibers, an adhesive.

### BACKGROUND ART

Heretofore, a method of incorporating a phenol type antioxidant or a method of incorporating zinc oxide has been known to be effective as a method to improve the resistance to discoloration by light of a polychloroprene latex composition.

For example, JP-A-2000-86821 (Denki Kagaku Kogyo K.K.) proposes to improve the color fastness to ultraviolet rays having a wavelength of less than 300 nm by incorporating a phenol compound having a specific structure to a polychloroprene latex.

Further, JP-A-11-209523 (Denki Kagaku Kogyo K.K.) discloses an invention to improve the resistance to discoloration by light of a polychloroprene latex composition by incorporating fine particulate zinc oxide having an average particle size of 200 nm.

However, with such prior art, there have been cases where the light stability is insufficient, and a further improvement has been desired.

It is an object of the present invention to provide a novel blend formulation of a polychloroprene latex composition having excellent resistance to discoloration by light.

### DISCLOSURE OF THE INVENTION

The present invention provides a polychloroprene latex composition as defined by claim 1.

The present inventors have conducted an extensive study to accomplish the above object and as a result, have found that the resistance to discoloration by light can be substantially improved by incorporating to a polychloroprene latex, a formamidine compound, a hindered amine compound, a phenol compound, a triazole compound, a benzophenone compound, each having a specific structure, alone or in combination, as shown below, and have arrived at the present invention. Further, they have invented an adhesive having excellent resistance to discoloration by light by incorporating a tackifier resin to the above polychloroprene latex composition.
1. A polychloroprene latex composition, characterized by containing a hindered amine compound having at least one functional group represented by.the following chemical formula (2) in its molecule: 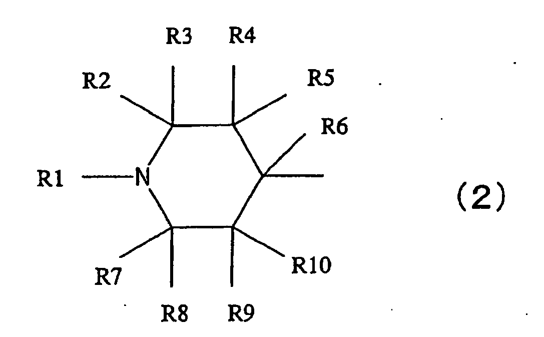 (wherein each of R1 to R10 which may be the same or different from one another, is a hydrogen atom, a C₁₋₁₀ alkyl group or a C₁₋₁₀ substituted alkyl group and a benzotriazole compound represented by the following chemical formula (5): 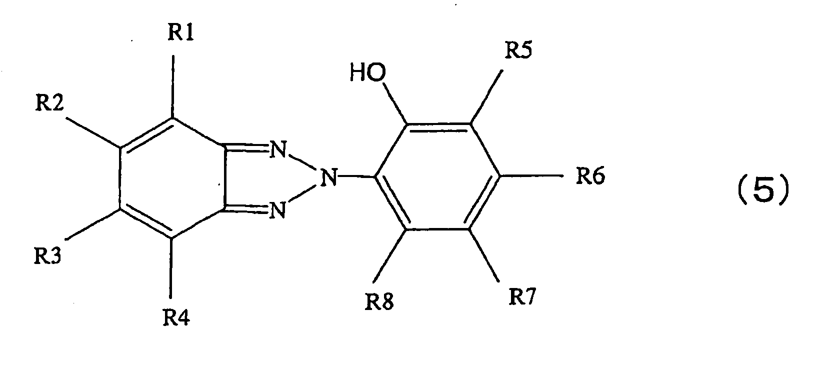 (wherein each of R1 to R8 which may be the same or different from one another, is a hydrogen atom, a halogen atom or a C₁₋₅ alkyl group.)
2. The polychloroprene latex composition according to Item 1, characterized by containing a phenol compound having at least one functional group represented by the following chemical formula (3) in its molecule: 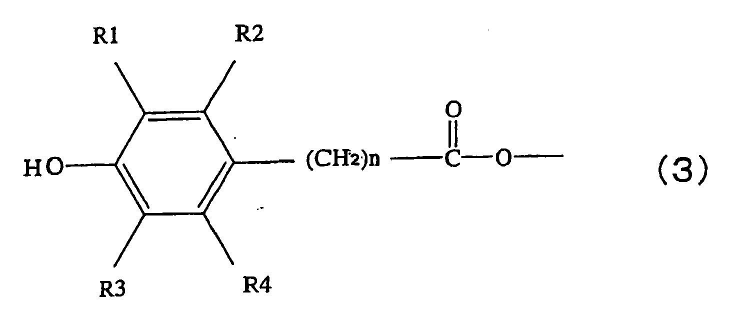 (wherein each of R1 to R4 which may be the same or different from one another, is a hydrogen atom or a C₁₋₅ alkyl group, and n is an integer of from 1 to 10.), and/or a phenol compound represented by the following chemical formula (4): 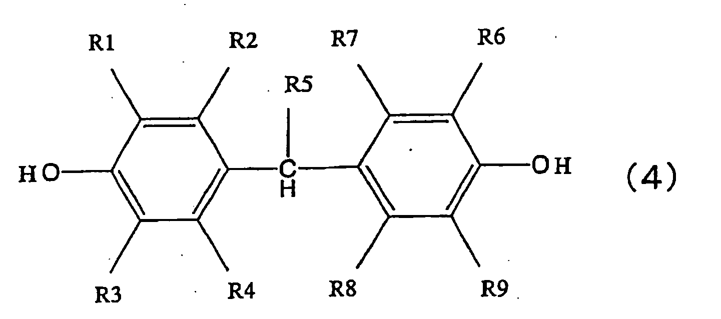 (wherein each of R1 to R9 which may be the same or different from one another; is a hydrogen atom or a C₁₋₅ alkyl group.)
   The polychloroprene latex composition according to the invention may contain a benzophenone compound represented by the following chemical formula (6): 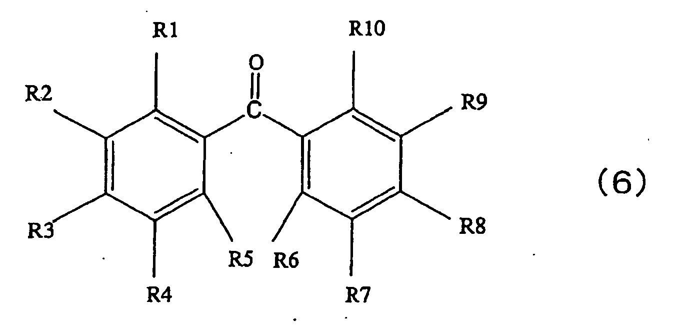 (wherein at least one of R1 to R10 is a hydroxyl group, and the rest is a hydrogen atom, a sulfate group, an alkyl group having at most 20 carbon atoms or a substituted alkyl group having at most 20 carbon atoms.)
3. The polychloroprene latex composition according to any one of Items 1 or 2, wherein the total content of the compounds represented by the chemical formulae (1) to (6) is from 0.01 to 50 parts by mass per 100 parts by mass as calculated as solid content of polychloroprene latex.
4. The polychloroprene latex composition according to any one of Items 1 to 3, wherein zinc oxide is contained in an amount of from 0.01 to 50 parts by mass per 100 parts by mass as calculated as solid content of polychloroprene latex.
5. An adhesive composition characterized by containing the polychloroprene latex composition as defined in any one of Items 1 to 4.
6. An adhesive composition characterized by having a tackifier resin incorporated to the polychloroprene latex composition as defined in any one of Items 1 to 4.

### BEST MODE FOR CARRYING OUT THE INVENTION

Now, the content of the present invention will be described in detail.

The polychloroprene latex in the present invention is a latex comprising, as the main component, a polymer or a copolymer obtained by polymerizing 2-chloro-1,3-butadiene (hereinafter referred to as chloroprene) alone or a monomer mixture comprising chloroprene and at least one copolymerizable monomer, using water as a medium in the presence of an emulsifier and/or a dispersant.

Monomers copolymerizable with chloroprene include, for example, 2,3-dichloro-1,3-butadiene, 1-chloro-1,3-butadiene, butadiene, isoprene, styrene, acrylonitrile, acrylic acid and its esters, methacrylic acid and its esters. If necessary, two or more types may be employed.

In the present invention, as a monomer copolymerizable with chloroprene, a carboxyl group-containing vinyl monomer may also be used. Such a carboxyl group-containing vinyl monomer may, for example, be methacrylic acid, acrylic acid, crotonic acid, fumaric acid, maleic acid or citraconic acid. If necessary, two or more types of carboxyl-containing vinyl monomers may be employed. Among them, methacrylic acid (which may also be called 2-methylpropenoic acid or α-methylacrylic acid) is easy to control at the time of emulsion copolymerization.

It is already known that if a polychloroprene latex having carboxyl groups introduced into the polymer chain by copolymerization, is used as an adhesive, it is possible to improve the ordinary state adhesive strength, the water resistant adhesive strength or the heat resistant adhesive strength by a combination with various known crosslinking agents.

In a case where the polychloroprene latex is to be produced by using a carboxyl group-containing vinyl monomer, the amount of such a monomer to be charged is preferably such that the carboxyl group-containing vinyl monomer is from 0.01 to 10 parts by mass per 100 parts by mass of the total of all monomers. If the carboxyl group-containing vinyl monomer is less than 0.01 part by mass, the crosslinking reactivity with various crosslinking agents can hardly be expected, and if the carboxyl group-containing vinyl monomer exceeds 10 parts by mass, the pot life when the crosslinking agent is added, tends to be short, such being not so desirable.

In the present invention, the emulsifier and/or the dispersant to be used for the emulsion polymerization for a polychloroprene latex is not particularly limited, and various anionic, nonionic or cationic emulsifiers or dispersants commonly used for polychloroprene latexes can be used. As an anionic emulsifier, a carboxylic acid type or a sulfate type may, for example, be mentioned, and for example, an alkali metal salt of rosin acid, a C₈₋₂₀ alkyl sulfonate, an alkylaryl sulfate, or a condensate of sodium naphthalenesulfonate with formaldehyde, may be mentioned. As a specific example of a nonionic type, a polyvinyl alcohol or its copolymer (such as a copolymer with an acrylamide), a polyvinyl ether or its copolymer (such as a copolymer with maleic acid), a polyvinylpyrrolidone or its copolymer (such as a copolymer with vinyl acetate) or a chemically modified product of such a (co)polymer, or a cellulose derivative (such as hydroxyethylcellulose) may be mentioned. As a specific example of the cation type, an aliphatic amine salt or an aliphatic quaternary ammonium salt may be mentioned, and, for example, octadecyltrimethylammonium chloride, dodecyltrimethylammonium chloride or dilauryldimethylammonium chloride may be mentioned.

The amount of the emulsifier and/or the dispersant in the polychloroprene latex in the present invention is preferably from 0.5 to 10 parts by mass per 100 parts by mass of the total of the initially charged monomers. If it is less than 0.5 part by mass, the emulsifying power tends to be inadequate, and if it exceeds 10 parts by mass, the water resistant adhesive strength tends to be low when the latex composition is used for an adhesive.

The polymerization conditions for the (co)polymer in the present invention are not particularly limited, and it is possible to adjust the solid content concentration, the molecular weight of the toluene-soluble content, the toluene-insoluble content (the gel content), by properly selecting and controlling the polymerization temperature, the polymerization catalyst, the chain transfer agent, the polymerization terminator, the final conversion, the monomer removal, the concentration condition.

In the present invention, the polymerization temperature for the (co)polymer is not particularly limited. However, in order to carry out the polymerization reaction smoothly, it is preferred to adjust the polymerization temperature within a range of from 10 to 50°C. The polymerization catalyst may, for example, be a persulfate such as potassium persulfate, or an organic peroxide such as tert-butyl hydroperoxide, and it is not particularly limited.

In the present invention, the type of the chain transfer agent for the (co)polymer is not particularly limited, and one which is commonly used for the emulsion polymerization of chloroprene, can be used. For example, a long chain alkylmercaptan such as n-dodecylmercaptan or tert-dodecylmercaptan, a dialkylxanthogenedisulfide such as diisopropylxathogenedisulfide or diethylxathogenedisulfide, or a known chain transfer agent such as iodoform, may be used.

In the present invention, the polymerization terminator (the polymerization inhibitor) for the (co)polymer is not particularly limited, and for example, 2,6-tert-butyl-4-methylphenol, phenothiazine or hydroxyamine may be used.

In the present invention, the final conversion for the (co)polymer is not particularly limited and can optionally be adjusted. An unreacted monomer may be removed by a monomer removal operation, and such a removal method is not particularly limited.

With the polychloroprene latex of the present invention, the solid content concentration can be controlled to a necessary level by concentration or dilution by an addition of water. The method for concentration may, for example, be concentration under reduced pressure, but is not particularly limited. Taking into consideration the drying speed of the adhesive and the storage stability of the main agent of the adhesive, the solid content concentration of the polychloroprene latex is preferably from 40 to 65 mass%, more preferably from 45 to 62 mass%.

The polychloroprene latex in the present invention can be made to be an adhesive having an excellent balance of the initial adhesive strength and the ordinary state adhesive strength, if the toluene insoluble content (the gel content) of the (co)polymer is from 5 to 70 mass%. If the toluene insoluble content is lower than 5 mass%, the ordinary state adhesive strength tends to be inadequate, and inversely, if it exceeds 70 mass%, the initial adhesive strength tends to be inadequate.

The polychloroprene latex composition of the present invention can also comprise a formamidine compound, which, may specifically be ethyl 4-[[(ethylphenylamino)methylene]amino]benzoate, or N-(4-ethoxycarbonylphenyl)-N'-methyl-N'-phenylformamidine.

The hindered amine compound represented by the above chemical formula (2) to be used in the present invention may, for example, be a dimethyl succinate/1-(2-hydroxyethyl)-4-hydroxy-2,2,6,6-tetramethylpiperidine polycondensate, a poly[{6-(1,1,3,3-tetramethylbutyl)amino-1,3,5-triazin-2,4-diyl}{(2,2,6,6-tetramethyl-4-piperidyl)imino}hexamethylene{(2,2,6,6-tetramethyl-4-piperidyl)imino}], an N,N'-bis(3-aminopropyl)ethylenediamine-2,4-bis[N-butyl-N-(1,2,2,6,6-pentamethyl-4-pyridyl)amino]-6-chloro-1,3,5-triazine condensate, bis(1-octyloxy-2,2,6,6-tetramethyl-4-piperidyl) sebacate, bis(2,2,6,6-tetramethyl-4-piperidyl) sebacate, bis(1,2,2,6,6-pentamethyl-4-piperidyl) 2-(3,5-tert-butyl-4-hydroxybenzyl) 2-n-butylmalonate, or 1,2,2,6,6-pentamethyl-4-piperidyl/tridecyl-1,2,3,4-butanetetracarboxylate.

The phenol compound having a functional group, represented by the above chemical formula (3) to be used in the present invention, may specifically be, for example, n-octadecyl-3-(4-hydroxy-3,5-di-tert-butylphenyl) propionate, tetrakis-[methylene-3-(3',5'-di-tert-butyl-4'-hydroxyphenyl)propionate]methane, bis[3,3'-bis(4'-hydroxy-3'-tert-butylphenyl)butyric acid]glycol ester, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythrityl-tetrakis[3-(3,5-di-tert-butyl-4-hydroxyphenyl) propionate], 2,2-thio-diethylenebis[3-(3,5-di-tert-butyl-4-hydroxyphenyl) propionate], isooctyl-3-(3,5-di-tert-butyl-4-hydroxyphenyl) propionate, or 1-[2-{3-(3,5-di-tert-butyl-4-hydroxyphenyl)propionyloxy}ethyl]-4-{3,5-di-tert-butyl-4-hydroxyphenyl)propionyloxy}-2,2,6,6-tetramethylpiperidine.

The phenol compound represented by the above chemical formula (4) to be used in the present invention, may specifically be, for example, 4,4'-butylidenebis(3-methyl-6-tert-butylphenol), 2,2'-methylenebis-(4-methyl-6-tert-butylphenol), or 2,2'-methylenebis-(4-ethyl-6-tert-butylphenol).

The triazole compound represented by the above chemical formula (5) to be used in the present invention, may specifically be, for example, 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, or 2-{2'-hydroxy-3'-(3",4",5",6"-tetrahydrophthalimidemethyl)-5'-methylphenyl}benzotriazole.

The benzophenone compound represented by the above chemical formula (6) to be used in the present invention, may specifically be, for example, 2,4-dihydroxybenzophenone, 2-hydroxy-4-methoxybenzophenone, 2-hydroxy-4-n-octoxybenzophenone, 2-hydroxy-4-dodecyloxybenzophenone, 2,2'-dihydroxy-4,4'-methoxybenzophenone, 2-hydroxy-4-methoxy-5-sulfobenzophenone, bis(2-methoxy-4-hydroxy-5-benzoylphenylmethane), 2-hydroxy-4-methoxy-2'-carboxybenzophenone, 2-hydroxy-4-octadecyloxybenzophenone, 2,2',4,4'-tetrahydroxybenzophenone, or 2-hydroxy-4-(2-hydroxy-3-methacryloxy)propoxybenzophenone.

The amount of the formamidine compound, the hindered amine compound, the phenol compound, the benzotriazole compound, the benzophenone compound, in the polychloroprene latex composition of the present invention is not particularly limited. However, in consideration of the resistance to discoloration by light, the storage stability and the blending cost of the polychloroprene latex composition, the total amount of addition is preferably from 0.01 to 30 parts by mass, more preferably from 0.2 to 10 parts by mass, per 100 parts by mass of the polychloroprene latex, as calculated as solid content. If the amount is less than 0.01 part by weight, the improvement in the resistance to discoloration by light tends to be inadequate, and if it exceeds 30 parts by weight, the unit price of the composition tends to be high, such being practically problematic.

The adhesive of the present invention is an adhesive containing the above-described polychloroprene latex composition, preferably one having a tackifier resin incorporated. The amount of the tackifier resin is not particularly limited, but it is usually preferably at least 5 parts by mass (solid content) and less than 150 parts by mass (solid content), per 100 parts by mass of the solid content of the polychloroprene latex. Within this range, the adequate ordinary state adhesive strength can be maintained. More preferably, it is added in an amount of at least 10 parts by mass and at most 100 parts by mass in view of the balance of the adhesive properties.

The tackifier resin here may specifically be, for example, a rosin resin, a polymerized rosin resin, an α-pinene resin, a β-pinene resin, a terpenephenol resin, a C5 fraction petroleum resin, a C9 fraction petroleum resin, a C5/C9 fraction petroleum resin, a DCPD petroleum resin, an alkylphenol resin, a xylene resin, a coumarone resin or a coumaroneindene resin. For example, in a case where it is used for bonding a shoe sole or a component, a heating/drying step may be provided, whereby the softening point of the resin to be selected, is preferably from 80 to 160°C.

In a case where a tackifier resin is to be incorporated, the method for incorporation is not particularly limited, but it is preferred to incorporate it in the form of an emulsion in order to uniformly disperse the resin in the adhesive. Further, the emulsion of the tackifier resin may be prepared by a method wherein it is dissolved in an organic solvent such as toluene, followed by emulsifying/dispersing in water by means of an emulsifier, whereupon the organic solvent is removed by heating under reduced pressure, or a method wherein it is pulverized into fine particles, followed by emulsification/dispersion. The former is preferred, since an emulsion of finer particles can be produced.

The polychloroprene latex composition may undergo a pH change during storage due to a dehydrochlorination reaction of the polychloroprene polymer, and, if necessary, zinc oxide may be incorporated as an acid-binding agent, whereby such a phenomenon can be prevented. In a case where zinc oxide is to be incorporated, the nature (the particle size or the specific surface area) of zinc oxide is not particularly limited.

The crystal system of zinc oxide is not particularly limited, and it may be amorphous or of a hexagonal system. The process for producing zinc oxide is also not particularly limited, and it may be one produced by any one of a French method (indirect method), an American method (direct method) and a wet system method. The French method (indirect method) is a method wherein metallic zinc is heated and vaporized at about 1000°C and oxidized by hot air to obtain zinc oxide powder. The American method (direct method) is a method wherein a reducing agent is added to a natural ore containing zinc, and zinc is directly vaporized and oxidized by hot air to obtain zinc oxide powder. The wet system method is a method wherein zinc oxide is prepared by an aqueous phase reaction, and for example, an aqueous soda ash solution is added to an aqueous zinc chloride solution to precipitate basic zinc carbonate, which is washed with water, dried and then calcined at about 600°C to obtain zinc oxide.

In the present invention, the particle form of zinc oxide is not particularly limited, and it may be spherical, needle-like, scaly (plate-like), spindle-shaped, polyhedral or amorphous.

In a case where zinc oxide is to be incorporated to the polychloroprene latex composition, the amount to be incorporated is preferably from 0.01 to 50 parts by mass, more preferably from 0.2 to 20 parts by mass, per 100 parts by mass of the solid content of the polychloroprene latex. Within such a range, the solvent resistance can further be improved. If zinc oxide is less than 0.01 part by weight, the effect as an acid-binding agent tends to be inadequate, and if it exceeds 50 parts by weight, the adhesive strength is likely to be impaired.

The method for incorporating zinc oxide is not particularly limited, and it may be incorporated in the form of a powder, or an aqueous dispersion may firstly be prepared by using an optional dispersant, and then may be incorporated. The latter is preferred, since it is thereby possible to uniformly disperse it in the main agent of the adhesive. To the polychloroprene latex composition or the adhesive of the present invention, a thickener, a filler, a film-forming assistant, an ultraviolet absorber, an antioxidant, a plasticizer, a vulcanizer, a vulcanization accelerator, a defoaming agent, a fungicide, a mildewproofing agent, may optionally be added depending upon the required performance.

In order to adjust the viscosity of the main agent, a thickener may be added. Specifically, the thickener may, for example, be sodium polyacrylate, water soluble polyurethane, associated polyurethane emulsion, alkali-swelling type acrylic emulsion, carboxymethyl cellulose (CMC), methyl cellulose (MC), hydroxyethylcellulose (HEC), hydroxypropyl cellulose (HPC) or synthetic smectite.

Further, in order to reduce the production cost, it is effective to add a filler to the main agent. Specifically, the filler may, for example, be calcium carbonate, aluminum hydroxide, titanium oxide, barium sulfate or synthetic silica.

The film-forming assistant may, for example, be propylene glycol, n-butyl ether, dipropylene glycol, tripropylene glycol, 2,2,4-trimethyl-1,3-pentadiol monoisobutyrate or 2,2,4-trimethyl-1,3-pentadiol diisobutyrate.

As a specific example of the vulcanization accelerator, a dithiocarbamate type, a xanthogene salt type, a thiuram type, an aldehydeammonia type, a thiourea type, a thiazole type, a sulfeneamide type or a guanidine type may, for example, be incorporated.

A specific example of the dithiocarbamate may, for example, be piperidine pentamethyldithiocarbamate, pipecholine pipecolyldithiocarbamate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, zinc dibenzyldithiocarbamate, sodium diethyldithiocarbmate, sodium dibutyldithiocarbamate, copper dimethyldithiocarbamate, ferric dimethyldithiocarbamate, or tellurium diethyldithiocarbamate.

A specific example of the xanthogenate type may, for example, be zinc butylxanthogenate or zinc isopropylxanthogenate.

A specific example of the thiuram type may, for example, be tetramethylthiuram disulfide, tetraethylthiuram disulfide, tetrabutylthiuram disulfide, tetrakis(2-ethylhexyl)thiuram disulfide, tetramethylthiuram monosulfide or dipentamethylenethiuram tetrasulfide.

A specific example of the aldehydeammonia type may, for example, be hexamethylenetetramine.

A specific example of the thiourea type may, for example, be N,N'-diphenylthiourea, trimethylthiourea or N,N'-diethylthiourea.

A specific example of the thiazole type may, for example, be 2-mercaptobenzothiazole, dibenzothiazyl sulfide, zinc salt of 2-mercaptobenzothiazole, a cyclohexylamine salt of 2-mercaptobenzothiazole, 2-(N,N-diethylthiocarbamoylthio) benzothiazole, or 2-(4'-morpholinodithio)benzothiazole.

A specific example of the sulfenamide type may, for example, be N-cyclohexyl-2-benzothiazolyl sulfenamide, N-tert-butyl-2-benzothiazolyl sulfenamide, N-oxydiethylene-2-benzothiazolyl sulfenamide, or N,N-dicyclohexyl-2-benzothiazolyl sulfenamide.

A specific example of the guanidine type may, for example, be 1,3-diphenylguanidine, di-o-tolylguanidine, 1-o-tolylbiguanide, or di-o-tolylguanidine salt of dicatechol borate.

In a case where a crosslinking agent is to be added to the polychloroprene latex composition of the present invention, various known crosslinking agents may be selected as such a crosslinking agent. Specifically, it may, for example, be a compound having a methylol group such as a melamine resin, a compound having an epoxy group such as an epoxy resin, a compound (isocyanate compound) having an isocyanate group such as a blocked isocyanate compound or a water-dispersible isocyanate compound, a compound having an oxazoline group, a compound having at least two hydroxyl groups in its molecule, such as a phenol resin or a glycol, or a compound (imine compound) having an imino group.

Among them, an isocyanate compound is most preferred, since it is not only capable of bonding to a hydroxyl group or a carboxyl group of the polychloroprene (co)polymer or an emulsifier, but also capable of forming an isocyanate derivative by a reaction with water, whereby a substantial improvement in the water resistant adhesive strength or the heat resistant adhesive strength can be expected. Further, the water-dispersible isocyanate compound is one having hydrophilic groups introduced to a polyisocyanate polymer having a structure such as biuret, isocyanurate, urethane, uretodione or allophanate in its molecule, obtainable from an aliphatic and/or alicyclic diisocyanate.

Namely, it is a self-emulsifiable isocyanate compound which can be dispersed as fine particles in water, when it is added and stirred in water.

The aliphatic and/or alicyclic isocyanate may, for example, be tetramethylene diisocyanate, pentamethylene diisocyanate, hexamethylene diisocyanate (HDI), trimethylhexamethylene diisocyanate, lysine diisocyanate (LDI), isophorone diisocyanate (IPDI), hydrogenated xylylene diisocyanate (hydrogenated XDI), tolylene diisocyanate (TDI), 4,4'-diphenylmethane diisocyanate (MDI), polymerized MDI, xylylene diisocyanate (XDI), naphthylene diisocyanate (NDI), p-phenylene diisocyanate (PPDI), tetramethylxylylene diisocyanate (TMXDI), dicyclohexylmethane diisocyanate (HMDI), isopropylidenebis(4-cyclohexylisocyanate) (IPC), cyclohexyl diisocyanate (CHPI), or tolidine diisocyanate (TODI). Among them, HDI, MDI, IPDI or hydrogenated XDI is preferred, as it is industrially readily available.

The effect as a crosslinking agent of the polyisocyanate compound is influenced by the isocyanate group content as calculated by the method stipulated in JIS K-7301 rather than by the starting material compound. In order to obtain a good adhesive strength, the isocyanate group content of the water-dispersible isocyanate compound to be used is preferably from 17 to 25 mass%.

The conditions under which the adhesive of the present invention is used, are not particularly limited.

The adherend may, for example, be wood material, concrete, rubber, porcelain. For example, for foot wears, the adhesive can be used for bonding the same types or different types of cloth (woven fabrics or nonwoven fabrics of nylon, polyester, cotton), natural leathers (oxhide, kangaroo hide), artificial leathers (polyurethane, polyvinyl chloride resin), vulcanized rubbers (SBR, BR, CR), and resins (non-foamed or foamed products of polyurethane, EVA).

The coating method and apparatus are not particularly limited. Specifically, a curtain flow coater method, a bar coater method or a roll coater method may, for example, be mentioned. Further, the roll coater method includes a gravure roll coater method and a reverse gravure roll coater method. For example, for foot wears, a roll coater method capable of continuously uniformly coating, is preferred for an insole, and manual operation by a brush is preferred in the bonding of the shoe sole or a component, since the coating area is small.

The press bonding apparatus, the press bonding conditions and the pressing pressure to be optionally used at the time of the bonding, are not particularly limited, and either hot press or cold press may suitably be used for the press bonding operation after superposing two adherends one on the other.

Now, the present invention will be described with reference to Examples. Further, "parts" in the description represents "parts by mass" unless otherwise specified.

### POLYMERIZATION EXAMPLE 1

Using a reactor having an internal capacity of 3 liters, 4 parts of disproportionated rosin acid, 1 part of a naphthalenesulfonic acid/formalin condensate (DEMOL N, tradename (manufactured by Kao Corporation)) and 1.5 parts of sodium hydroxide were dissolved in 110 parts of water. To this solution, 100 parts of a chloroprene monomer and 0.2 part of dodecylmercaptan were added and emulsified at 40°C. Then, in a nitrogen atmosphere, using sodium sulfite and potassium persulfate as initiators, polymerization was carried out in a predetermined method until the conversion of the monomer became 98%.

The polymerization was terminated by an addition of a polymerization terminator, whereupon the solid content concentration was adjusted to 50%. Such a latex was subjected to the following tests.

### EXAMPLES 1 to 18 and COMPARATIVE EXAMPLES 1 to 7

Using the polychloroprene latex obtained in Polymerization Example 1, blending was carried out by the blend formulations in Table 1 to obtain chloroprene latex compositions of Examples 1 to 18 and Comparative Examples 1 to 7. The unit of the blended amounts is mass per the solid content.

In the Examples and the Comparative Examples, N-(4-ethoxycarbonylphenyl)-N'-methyl-N'-phenylformamidine as the formamidine compound, and bis(1,2,2,6,6-pentamethyl-4-piperidinyl)sebacate (Thinuvin 765, tradename, manufactured by Chiba Specialty Chemicals Inc.) as the hindered amine compound-1, were added directly to the chloroprene latex.

Further, with respect to N'N'-bis(3-aminopropyl)ethylenediamine-2,4-bis[N-butyl-N-(1,2,2,6,6-pentamethyl-4-piperidyl)amino]-6-chloro-1,3-5-triazine condensate (CHMASSORB 119FL, tradename, manufactured by Chiba Specialty Chemicals Inc.) as the hindered amine compound-2, n-octadecyl-3-(4-hydroxy-3,5-di-t-butylphenyl)propionate (ANTAGE W-300, tradename, manufactured by Kawaguchi Chemical Industry Co., LTD.) as the phenol compound-1, 4,4'-butylidenebis-(6-t-butyl-3-methylphenol) (Irganox 1076, tradename, manufactured by Chiba Specialty Chemicals Inc.) as the phenol compound-2, 2-(2'-hydroxy-3'-t-butyl-5'-methylphenyl)-5-chlorobenzotriazole (Tinuvin 326, tradename, manufactured by Chiba Specialty Chemicals Inc.) as the benzotriazole, and 2-hydroxy-4-n-octoxybenzophenone (TOMISORB 800, tradename, manufactured by Yoshitomi Fine Chemicals, Ltd.) as the benzophenone, 40 parts of each compound was mixed with 57 parts of pure water and 3 parts in wet of an aqueous sodium dialkylsulfosuccinate solution (PELEX OT-P, tradename, manufactured by Kao Corporation) as an emulsifier, followed by pulverization and stirring in a porcelain ball mill for 1 day to prepare an emulsion. Such emulsions were subjected to the tests.

The resistance to discoloration by light of the polychloroprene latex compositions of Examples 1 to 18 and Comparative Examples 1 to 7 was evaluated by the following method.

### Evaluation method for resistance to discoloration by light

A polychloroprene latex composition was coated by a brush in an amount of 200 g/m² on absorbent blotting paper SIM-1 (manufactured by KOKUYO Co., Ltd.) and dried at 23°C for 3 hours and irradiated for from 12 to 24 hours in a metal casing using as a power source a 300 W electric bulb ULTRA-VITALUX SUN LUMP (manufactured by OSRAM Co., Germany). Here, during the irradiation, the internal temperature of the metal casing was controlled to be 50°C, and the distance between the light source and the sample was set to be 250 mm.

With respect to the color, the color difference (ΔE) from a porcelain standard white plate (L*=92.62, a*=0.14, b*=2.95) was measured by a Multi Spectro Colour Meter (manufactured by Suga Test Instruments Co., Ltd.).

Here, L*, a* and b* are coordinate axes of the color space as stipulated in CIE (Commission International de l'Eclairage) 1976, and they represent White directional coordinate, Green-Red coordinate and Yellow-Blue coordinate, respectively.

The evaluation results obtained in Examples 1 to 18 and Comparative Examples 1 to 7 are shown in Table 1.

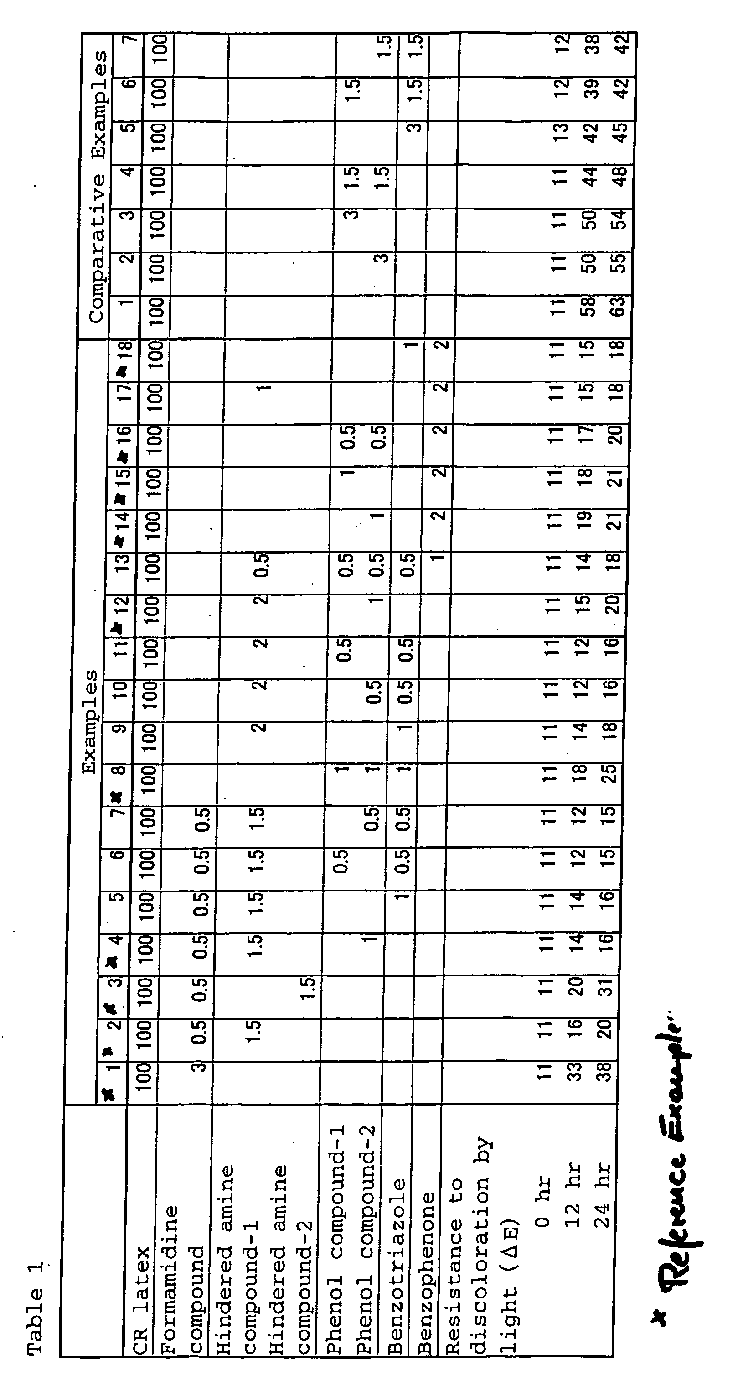

### EXAMPLES 19 to 36 and COMPARATIVE EXAMPLES 8 to 14

Using the polychloroprene latex obtained in Polymerization Example 1, blending was carried out by the blend formulations in Table 2 to obtain chloroprene latex compositions of Examples 19 to 36 and Comparative Examples 8 to 14. The unit of the blended amounts was the weight of solid content.

Here, as the tackifier resin, a 53% emulsion of a terpenephenol resin having a softening point of 150°C (TAMANOL E-100, tradename, manufactured by Arakawa Chemical Industries, Ltd.) was used. The evaluation method for the resistance to discoloration by light of the polychloroprene latex compositions of Examples 19 to 39 and Comparative Examples 8 to 14 was the same as in Examples 1 to 18 and Comparative Examples 1 to 7.

### Evaluation of bond strength

### 1. Method for preparation of a sample for the evaluation of bond strength

### Vulcanized SBR/vulcanized SBR

One side of each of two sheets of vulcanized SBR (size of the overlap portion: 20 mm in width × 70 mm in length) was subjected to buffing by a buffing machine, and the buffed surface was cleaned with acetone. After being cleaned, it was wiped with a gauze having a 3% ethyl acetate solution of trichloroisocyanuric acid impregnated, followed by drying at 23°C at room temperature for 10 minutes and then wiped with a gauze having a commercially available CR solvent primer (P-79, tradename, manufactured by NO-TAPE INDUSTRIAL CO., LTD.) impregnated. After drying for 10 minutes in an atmosphere of 60°C, 150 g (wet)/m² of a latex composition was coated by a brush and dried for 3 hours in an atmosphere of 23°C. Then, 200 g (wet)/m² of a latex composition was coated by a brush and dried for 5 minutes in an atmosphere of 70°C. Further, once more, 200 g (wet)/m² of a latex composition was coated by a brush and dried for 5 minutes in an atmosphere of 70°C, followed by putting together and press bonding by a hand roller.

### Foamed EVA/polyester cloth

On a closed cell foamed EVA sheet (3F-10, tradename, manufactured by SANFUKU INDUSTRY CO., LTD.) having a thickness of 5 mm and a density of 95 kg/m³, 200 g (wet)/m² of a latex composition was coated by a roll coater and dried for 4 minutes in an atmosphere of 70°C. A polyester woven fabric was laid thereon and press bonded under a pressure of 1 kgf/cm² by a press machine heated to 130°C.

### 2. Evaluation method for bond strength Initial bond strength

After aging for 10 minutes in an atmosphere of 23°C, the peel strength at 180° was measured by a tensile tester at a tensile speed of 200 mm/min.

### Ordinary state bond strength

After aging for 5 days in an atmosphere of 23°C, the peel strength at 180° was measured by a tensile tester at a tensile speed of 200 mm/min.

The evaluation results obtained in Examples 19 to 36 and Comparative Examples 8 to 14 are shown in Table 2.

Here, in Table 2, MF is an abbreviation of Material Failure which means breakage of the foamed EVA sheet.

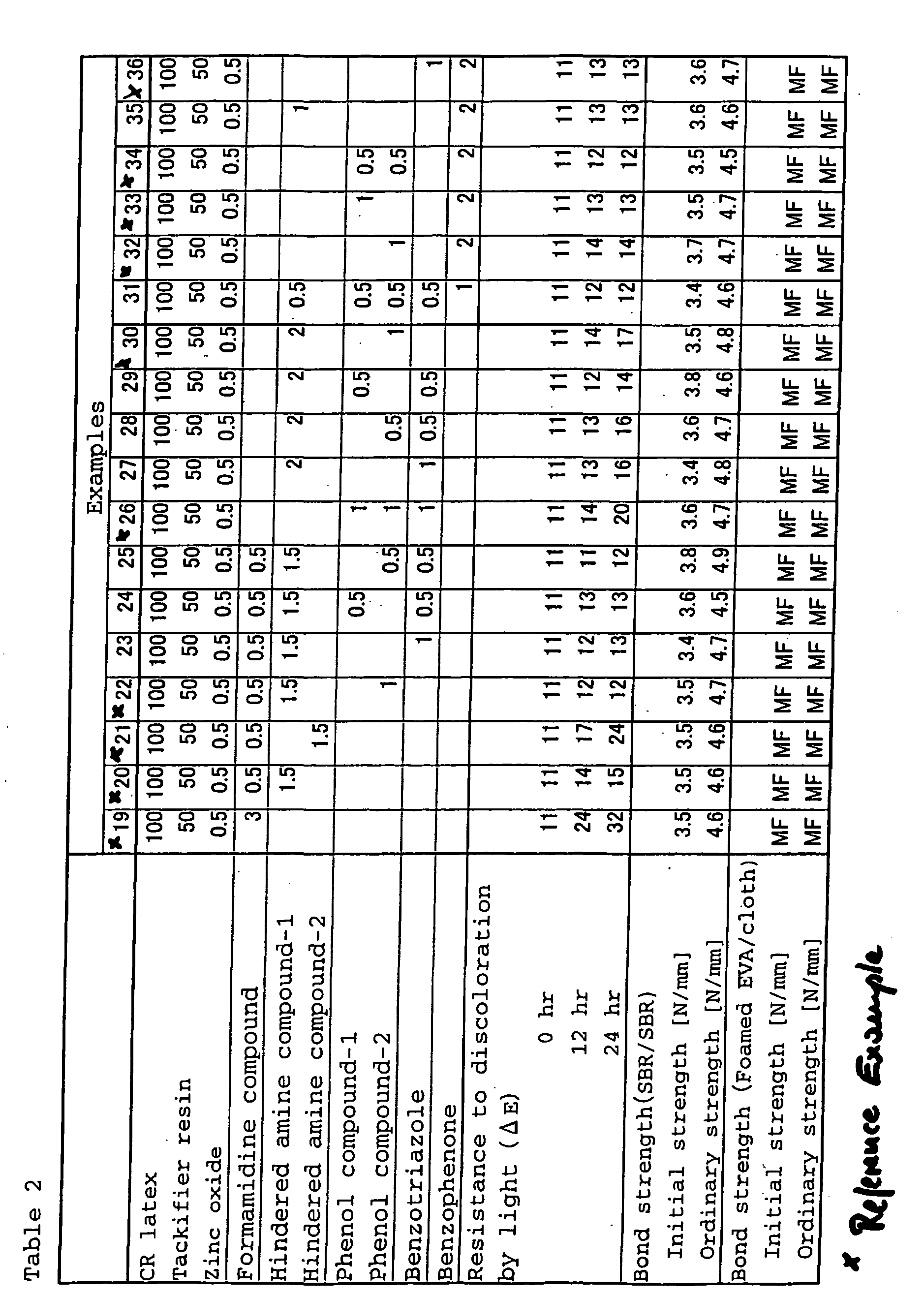

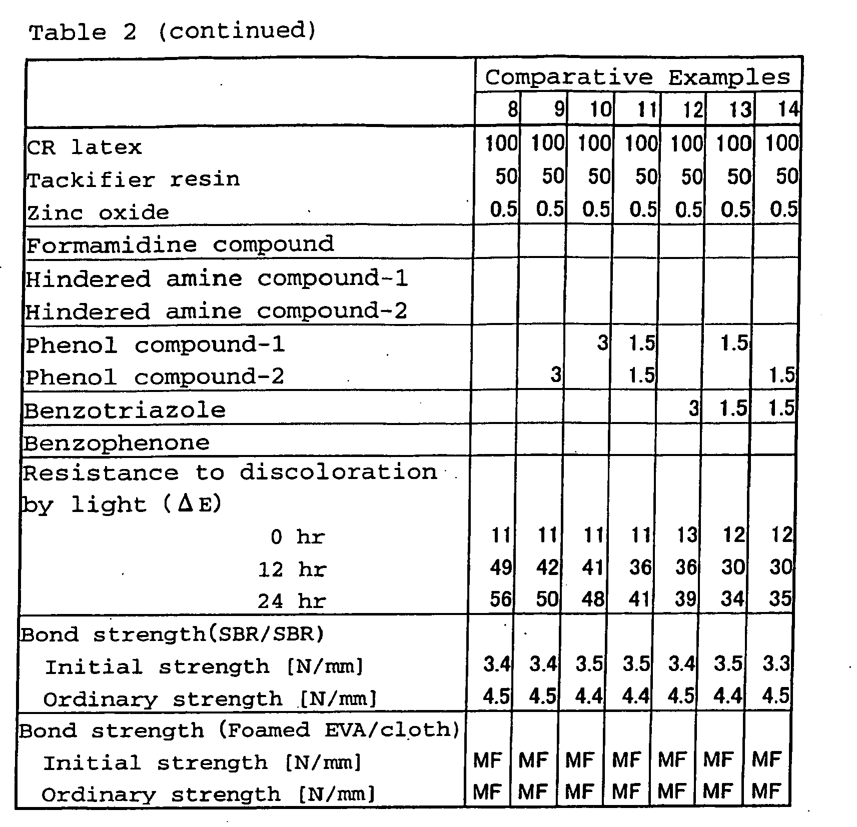

### INDUSTRIAL APPLICABILITY

As is evident from Table 1, the resistance to discoloration by light of the blend formulations of the polychloroprene latex compositions of the present invention is superior to the resistance to discoloration by light of the conventional blend formulations (Comparative Examples 1 to 7).

Further, as is evident from Table 2, the resistance to discoloration by light of the adhesive compositions of the present invention is superior to the resistance to discoloration by light of the conventional adhesive compositions (Comparative Examples 8 to 14).

## Claims

1. A polychloroprene latex composition **characterized by** containing a hindered amine compound having at least one functional group represented by the chemical formula (2) in its molecule: 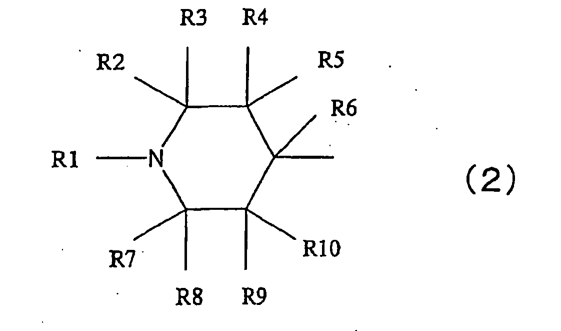 (wherein each of R1 to R10 which may be the same or different from one another, is a hydrogen atom, a C₁₋₁₀ alkyl group or a C₁₋₁₀ substituted alkyl group), and
a benzotriazole compound represented by the chemical formula (5): 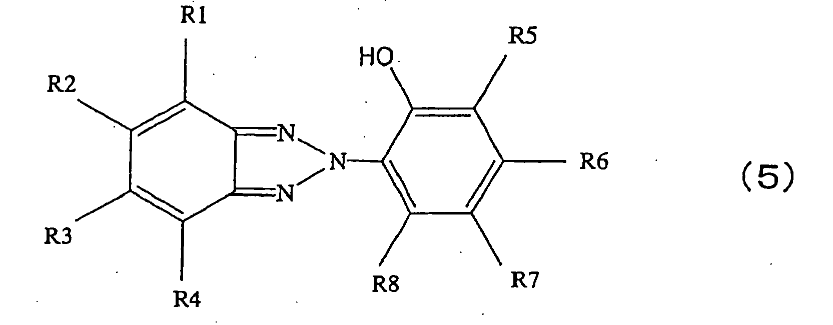 (wherein each of R1 to R8 which may be the same or different from one another, is a hydrogen atom, a halogen atom or a C₁₋₅ alkyl group).

2. The polychloroprene latex composition according to Claim 1, which further contains a phenol compound having at least one functional group represented by the chemical formula (3) in its molecule: 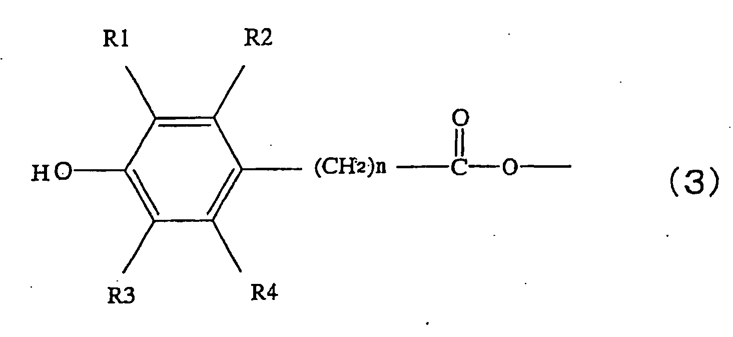 (wherein each of R1 to R4 which may be the same or different from one another, is a hydrogen atom or a C₁₋₅ alkyl group, and n is an integer of from 1 to 10) and/or a phenol compound represented by the chemical formula (4): 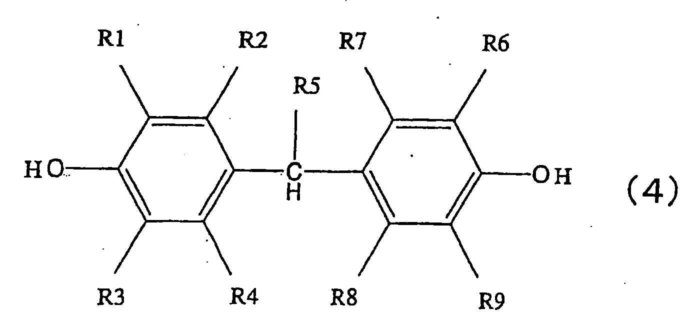 (wherein each of R1 to R9 which may be the same or different from one another, is a hydrogen atom or a C₁₋₈ alkyl group).

3. The polychloroprene latex composition according to Claim 1 or 2, which comprises the compounds represented by
(i) a formamidine compound selected from ethyl 4-[[(ethylphenylamino)methylene]amino]benzoate or N-(4-ethoxycarbonylphenyl)-N'-methyl-N'-phenylformamidine,
(ii) the chemical formulae (2) to (5), and
(iii) the chemical formula (6): 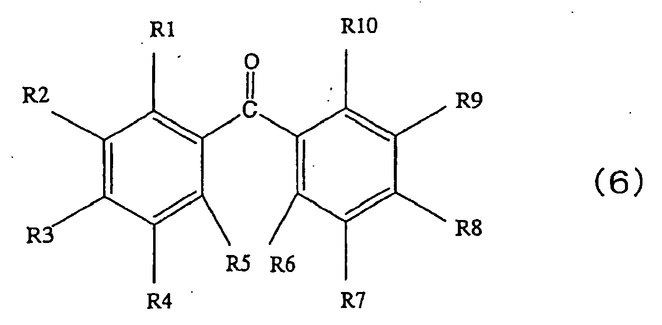 (wherein at least one of R1 to R10 is a hydroxyl group, and the rest is a hydrogen atom, a sulfate group, an alkyl group having at most 20 carbon atoms or a substituted alkyl group having at most 20 carbon atoms), whereby the total content
is from 0.01 to 50 parts by mass per 100 parts by mass as calculated as solid content of polychloroprene latex.

4. The polychloroprene latex composition according to any one of Claims 1 to 3, wherein zinc oxide is contained in an amount of from 0.01 to 50 parts by mass per 100 parts by mass as calculated as solid content of polychloroprene latex.

5. An adhesive composition **characterized by** containing the polychloroprene latex composition, as defined in any one of Claims 1 to 4.

6. An adhesive composition **characterized by** having a tackifier resin incorporated to the polychloroprene latex composition as defined in any one of Claims 1 to 4.

7. Use of a polychloroprene latex composition, as defined in any one of Claims 1 to 4, in an adhesive composition.

8. Use of a polychloroprene latex composition, as defined in any one of Claims 1 to 4, in impregnated paper.

9. Use of a polychloroprene latex composition, as defined in any one of Claims 1 to 4, as a binder for fibers.

10. A process of producing a polychloroprene latex composition, as defined in any one of Claims 1 to 4, by incorporating to a polychloroprene latex, the hindered amine compound having at least one functional group represented by the chemical formula (2) in its molecule and the benzotriazole compound represented by the chemical formula (5).

## Patentansprüche

1. Polychloroprenlatex-Zusammensetzung, **gekennzeichnet durch** einen Gehalt einer sterisch anspruchsvollen Aminverbindung mit mindestens einer funktionellen Gruppe der chemischen Formel (2) im Molekül: 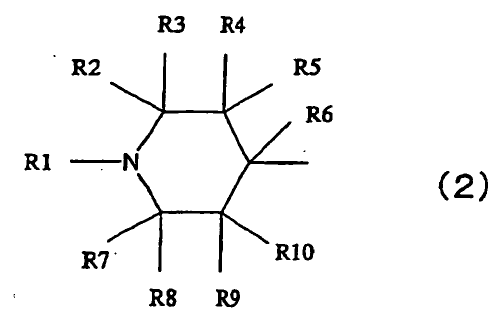 (wobei jedes R1 bis R10, die gleich oder verschieden sein können, für ein Wasserstoffatom, eine C₁₋₁₀ Alkylgruppe oder eine C₁₋₁₀ substituierte Alkylgruppe steht), und
eine Benzotriazolverbindung, der chemischen Formel (5): 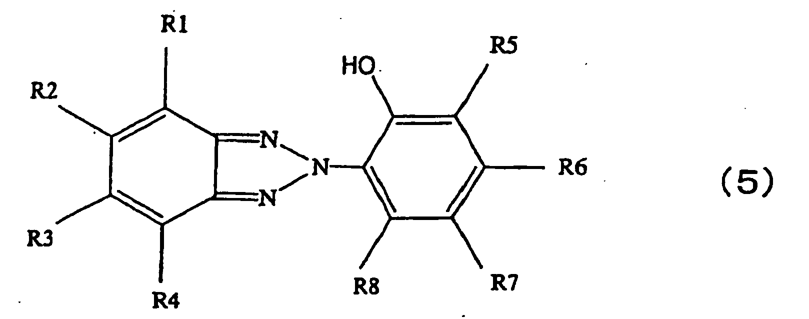 (wobei jedes R1 bis R8, die gleich oder verschieden sein können für ein Wasserstoffatom, ein Halogenatom oder eine C₁₋₅ Alkylgruppe stehen).

2. Die Polychloroprenlatex-Zusammensetzung nach Anspruch 1, die weiterhin eine Phenolverbindung enthält, mit mindestens einer funktionellen Gruppe der chemischen Formel (3) im Molekül: 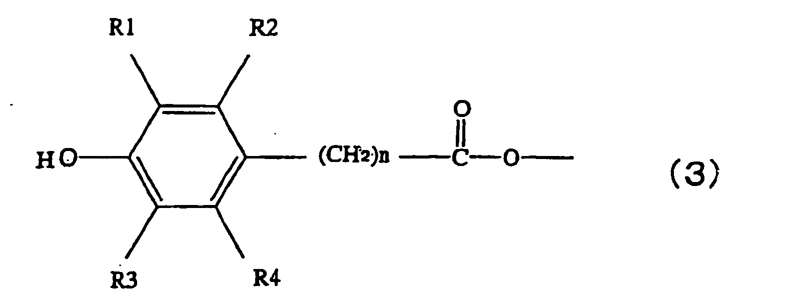 (wobei jedes R1 bis R4, die gleich oder verschieden voneinander sein können, für ein Wasserstoffatom oder eine C₁₋₅ Alkylgruppe stehen und n für eine ganze Zahl von 1 bis 10 steht) und/oder eine Phenolverbindung der chemischen Formel (4): 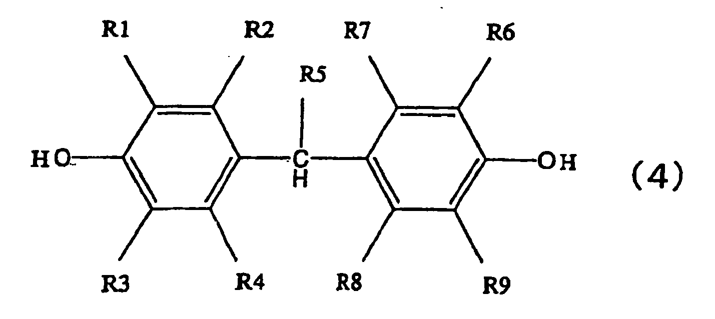 (wobei jedes R1 bis R9, die gleich oder verschieden sein können, für ein Wasserstoffatom oder eine C₁₋₅ Alkylgruppe stehen).

3. Die Polychloropren-Latexzusammensetzung nach Anspruch 1 oder 2, die Verbindungen umfasst, die dargestellt werden von
(i) einer Formamidinverbindung ausgewähl aus Ethyl 4-[[(ethylphenylamino)methylen]amino]benzoat oder N-(4-ethoxycarbonylphenyl)-N'-methyl-N'-phenylformamidin,
(ii) chemischen Formeln (2) oder (5), und
(iii) chemischer Formel (6): 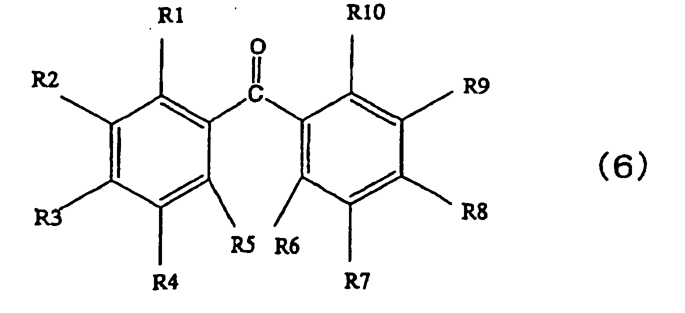 (wobei mindestens ein Substituent aus R1 bis R10 für eine Hydroxylgruppe steht und die anderen für ein Wasserstoffatom, eine Sulfatgruppe, eine Alkylgruppe mit höchstens 20 Kohlenstoffatomen oder eine substituierte Alkylgruppe mit höchstens 20 Kohlenstoffatomen stehen, wobei die Gesamtmenge im Bereich von 0,01 bis 50 Massenteilen pro 100 Massenteile beträgt, die berechnet wird als Feststoffgehalt des Polychloropren-Latexes.

4. Die Polychloroprenlatex-Zusammensetzung nach einem der Ansprüche 1 bis 3, wobei Zinkoxid in einer Menge von 0,01 bis 50 Massenteile pro 100 Massenteile, berechnet als Feststoffgehalt des Polychloroprenlatexes, enthalten ist.

5. Klebstoff-Zusammensetzung, **dadurch gekennzeichnet, dass** sie die Polychloroprenlatex-Zusammensetzung, die in einem der Ansprüche 1 bis 4 definiert wird, enthält.

6. Klebstoff-Zusammensetzung, **dadurch gekennzeichnet, dass** ein klebrigmachendes Harz einverleibt wurde in die Polychloroprenlatex-Zusammensetzung, die in einem der Ansprüche 1 bis 4 definiert wird.

7. Verwendung einer Polychloroprenlatex-Zusammensetzung, wie sie in einem der Ansprüche 1 bis 4 definiert wird, in einer Klebstoff-Zusammensetzung.

8. Verwendung einer Polychloroprenlatex-Zusammensetzung, wie sie in einem der Ansprüche 1 bis 4 definiert wird, für imprägniertes Papier.

9. Verwendung einer Polychloroprenlatex-Zusammensetzung, wie sie in einem der Ansprüche 1 bis 4 definiert wird, als Bindemittel für Fasern.

10. Verfahren zur Herstellung einer Polychloroprenlatex-Zusammensetzung, wie sie in einem der Ansprüche 1 bis 4 definiert wird, durch Einverleiben eines Polychloroprenlatexes, der eine sterisch anspruchsvolle Aminverbindung mit mindestens einer funktionellen Gruppe der chemischen Formel (2) im Molekül und die Benzotriazolverbindung der chemischen Formel (5) umfasst.

## Revendications

1. Composition de latex de polychloroprène, **caractérisée en ce qu'**elle contient un composé amine encombrée ayant au moins un groupe fonctionnel représenté par la formule chimique (2) dans sa molécule : 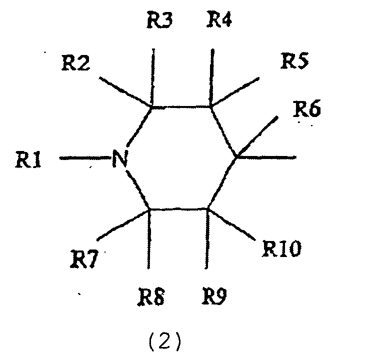 (dans laquelle chacun de R1 à R10, qui peuvent être identiques ou différents les uns des autres, est un atome d'hydrogène, un groupe alkyle en C₁ à C₁₀ ou un groupe alkyle substitué en C₁ à C₁₀), et
un composé benzotriazole représenté par la formule chimique (5) : 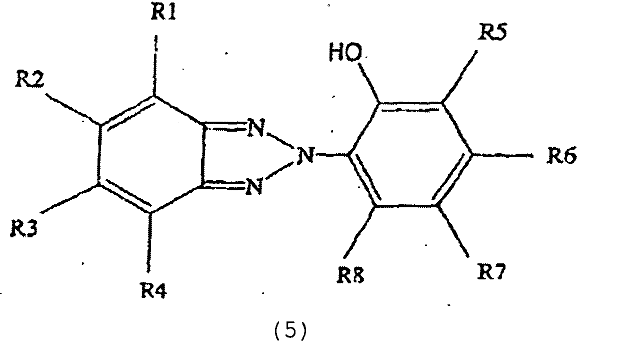 (dans laquelle chacun de R1 à R8, qui peuvent être identiques ou différents les uns des autres, est un atome d'hydrogène, un atome d'halogène ou un groupe alkyle en C₁ à C₅).

2. Composition de latex de polychloroprène selon la revendication 1, qui comprend en outre un composé phénol ayant au moins un groupe fonctionnel représenté par la formule chimique (3) dans sa molécule : 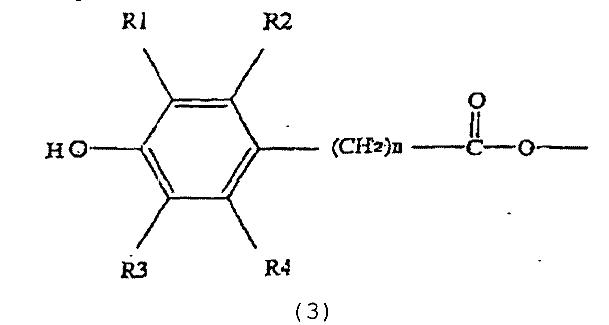 (dans laquelle chacun de R1 à R4, qui peuvent être identiques ou différents les uns des autres, est un atome d'hydrogène ou un groupe alkyle en C₁ à C₅, et n est un entier de 1 à 10) et/ou un composé phénol représenté par la formule chimique (4) : 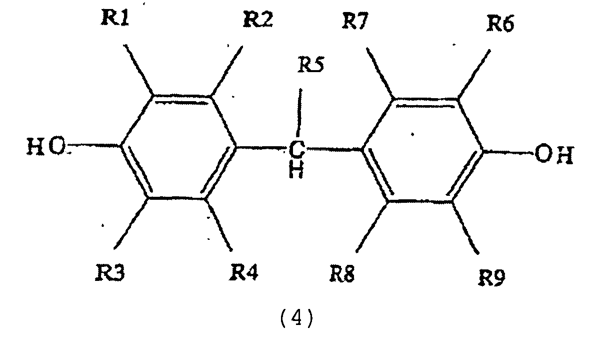 (dans laquelle chacun de R1 à R9, qui peuvent être identiques ou différents les uns des autres, est un atome d'hydrogène ou un groupe alkyle en C₁ à C₅).

3. Composition de latex de polychloroprène selon la revendication 1 ou 2, qui comprend les composés représentés par :
(i) un composé formamidine choisi entre le 4-[[(éthyl-phénylamino)méthylène]amino]benzoate d'éthyle et la N-(4-éthoxycarbonylphényl)-N'-méthyl-N'-phényl-formamidine,
(ii) les formules chimiques (2) à (5) ; et
(iii)la formule chimique (6) : 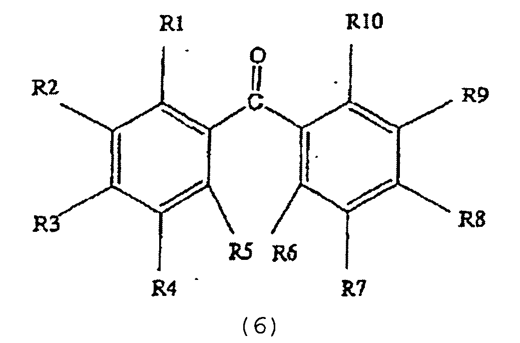 (dans laquelle au moins l'un de R1 à R10 est un groupe hydroxyle, et le reste est un atome d'hydrogène, un groupe sulfate, un groupe alkyle ayant au plus 20 atomes de carbone ou un groupe alkyle substitué ayant au plus 20 atomes de carbone), la teneur totale étant de 0,01 à 50 parties en masse pour 100 parties en masse calculées en tant que teneur en extrait sec de latex de polychloroprène.

4. Composition de latex de polychloroprène selon l'une quelconque des revendications 1 à 3, dans laquelle de l'oxyde de zinc est présent en une quantité de 0,01 à 50 parties en masse pour 100 parties en masse calculées en tant que teneur en extrait sec de latex de polychloroprène.

5. Composition adhésive **caractérisée en ce qu'**elle contient la composition de latex de polychloroprène telle que définie dans l'une quelconque des revendications 1 à 4.

6. Composition adhésive **caractérisée en ce qu'**elle a une résine tackifiante incorporée dans la composition de latex de polychloroprène telle que définie dans l'une quelconque des revendications 1 à 4.

7. Utilisation d'une composition de latex de polychloroprène, telle que définie dans l'une quelconque des revendications 1 à 4, dans une composition adhésive.

8. Utilisation d'une composition de latex de polychloroprène, telle que définie dans l'une quelconque des revendications 1 à 4, dans un papier imprégné.

9. Utilisation d'une composition de latex de polychloroprène, telle que définie dans l'une quelconque des revendications 1 à 4, en tant que liant pour fibres.

10. Procédé pour produire une composition de latex de polychloroprène, telle que définie dans l'une quelconque des revendications 1 à 4, par incorporation, à un latex de polychloroprène, du composé amine encombrée ayant au moins un groupe fonctionnel représenté par la formule chimique (2) dans sa molécule et du composé benzotriazole représenté par la formule chimique (5).
